# EUROPEAN PATENT APPLICATION

(11) **EP 4 700 257 A1**
(43) Date of publication of application: **25.02.2026**
(21) Application number: 24195873.5
(22) Date of filing: 22.08.2024
(51) Int. Cl.: F16H 48/36, F16H 57/04

(54) **INTEGRATED HIGH VOLTAGE AXLE DRIVE**

(71) Applicant: Schaeffler Technologies AG & Co. KG, 91074 Herzogenaurach (DE)
(72) Inventor: Schmidbauer, Florian, 80687 München (DE)
(74) Representative: Schaeffler Technologies

(57) **Abstract**

The present invention relates to an integrated axle drive assembly (10) and a method for operating an integrated axle drive assembly (10). The integrated axle drive assembly (10) includes a hollow shaft (16), at least one drive shaft (12,14) extending through and concentric with the hollow shaft (16), an e-machine (22), the hollow shaft (16) extending through and connected to the e-machine (22), a reducer (26) located next to the e-machine (22), the hollow shaft (16) engaged with the reducer (26), and an inverter (28) located next to the e-machine (22), the hollow shaft (16) extending through the inverter (28). The integrated axle drive assembly includes at least one brake assembly (30,34) connected to the drive shaft (12,14) and operable for applying a brake force to the at least one drive shaft (12,14). The hollow shaft (16), the e-machine (22), the reducer (26), the inverter (28) and the at least one brake assembly (30,34) are disposed in a housing (44), and the at least one drive shaft (12,14) at least partially extends through and protrudes out of the housing (44). The e-machine (22) rotates the hollow shaft (16) such that the hollow shaft (16) drives the reducer (26) and the at least one drive shaft (12,14).

## Description

The invention relates generally to an integrated electric drive assembly having concentric drive shafts, and integrates an inverter, an electric machine, a reducer, a differential, brakes, and ani-lock braking sensors into a single housing.

Many different types of electrical machines are generally known and are used for many different applications. Electrical machines, such as brushless DC (BLDC), synchronous or asynchronous AC, switched reluctance (SRM), axial flux (AF), have various advantages and disadvantages with regard to geometry, driving circuit (requiring a digital signal processor (DSP) or a simple microcontroller), required sensors (current sensor, position sensor), and operating characteristics (cogging, torque ripple), etc.

Axle drive assemblies consume a large amount of volume, and may have undesirable packaging characteristics. A significant part of the volume occupied by the axle drive assemblies is the housing. Most axle drive assemblies have one or more drive shafts, where the drive shafts are parallel, but offset relative to, the axis of the motor. Axle drive assemblies with these types of designs have undesirable packaging volumes.

Therefore, there exists a need for an axle drive assembly which has a reduced packaging volume and increased efficiency.

It is therefore an object of the present invention to provide an axle drive assembly which has desirable packaging and occupies less volume. In an embodiment, the axis of the drive shaft and the axis of the machine are in alignment relative to one another, facilitating an increase in power and torque density.

In an embodiment, the present invention is an axle drive assembly which includes mounting of the inverter, the electric machine, the reducer and differential in the same cylindrical housing. In an embodiment, the reducer and the differential share (i.e., are in mesh with) the same ring gear.

In an embodiment, the brake assemblies of the axle drive system are in a separate housing, the brake assemblies are assembled together and then bolted to the left and right housing of the other components.

This object may be achieved by the electric drive system having concentric drive shafts according to independent claim 1, and the method according to independent claim 8. Preferred embodiments are given in the dependent claims.

In an embodiment, the present invention is an integrated axle drive assembly, having a hollow shaft, at least one drive shaft extending through and concentric with the hollow shaft, an e-machine, the hollow shaft extending through and connected to the e-machine, a reducer located next to the e-machine, the hollow shaft engaged with the reducer, and an inverter located next to the e-machine, the hollow shaft extending through the inverter. In an embodiment, the integrated axle drive assembly includes at least one brake assembly connected to the drive shaft and operable for applying a brake force to the drive shaft, and a housing, the hollow shaft, the e-machine, the reducer, the inverter and the brake assembly disposed in the housing, and the drive shaft at least partially extends through and protrudes out of the housing. In an embodiment, the e-machine rotates the hollow shaft such that the hollow shaft drives the reducer and the drive shaft.

In an embodiment, a differential is adjacent to and engaged with the reducer, and the drive shaft is engaged with the differential.

In an embodiment, a first drive shaft extends through and is concentric with the hollow shaft, the first drive shaft extending through the inverter and out of the housing, the first drive shaft also extending through the reducer and engaged with the differential. A second drive shaft is engaged with the differential, the first drive shaft and the second drive shaft rotate about the same axis. The reducer is driven by the hollow shaft such that the reducer drives the differential, and the differential drives the first draft shaft and the second drive shaft.

In an embodiment, a first brake assembly is located adjacent to the inverter, and a portion of the first shaft extends through the first brake assembly. A second brake assembly is located adjacent to the differential, a portion of the second shaft extends through the second brake assembly. The first brake assembly selectively limits the rotation of the first drive shaft, and the second brake assembly selectively limits the rotation of the second drive shaft.

In an embodiment, the first brake assembly and the second brake assembly located in the housing are liquid cooled.

In an embodiment, the hollow shaft, the e-machine, and the reducer are oil cooled.

In an embodiment a ring is mounted to the hollow shaft such that the ring is circumscribed by the inverter, and the inverter detects the rotational speed and angle of the ring which corresponds to the rotational speed and angle of the hollow shaft.

In an embodiment, the hollow shaft, the first drive shaft, and the second drive shaft rotate about the same axis.

In an embodiment, the inverter is water cooled.

A method for operating an axle drive assembly, including the steps of providing a hollow shaft, providing a first drive shaft extending through and concentric with the hollow shaft, providing a second drive shaft, and providing a differential, the first drive shaft engaged with the differential, and the second drive shaft engaged with the differential. The method also includes the steps of providing an e-machine, the hollow shaft extending through and connected to the e-machine, providing a reducer located between the e-machine and the differential such that the reducer is engaged with the differential, the hollow shaft engaged with the reducer and the first drive shaft extends through the reducer, providing an inverter located next to the e-machine, the hollow shaft extending through the inverter, providing at least one brake assembly, and providing a housing, the hollow shaft, the e-machine, the reducer, the inverter and the brake assembly disposed in the housing, the first drive shaft at least partially extends through and protrudes out of the housing, and the second drive shaft at least partially extends through and protrudes out of the housing. The method also includes the steps of rotating the hollow shaft via the e-machine, which transfers rotational force to the reducer, and the reducer then transfers the rotational force to the differential, and the differential transfers the rotational force to the first drive shaft and the second drive shaft.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:
Fig. 1 is a diagram of an axle drive assembly, according to embodiments of the present invention; and
Fig. 2 is a diagram of a vehicle having at least one axle drive assembly, according to embodiments of the present invention.

The following description of the preferred embodiment(s) is merely exemplary in nature and is in no way intended to limit the invention, its application, or uses.

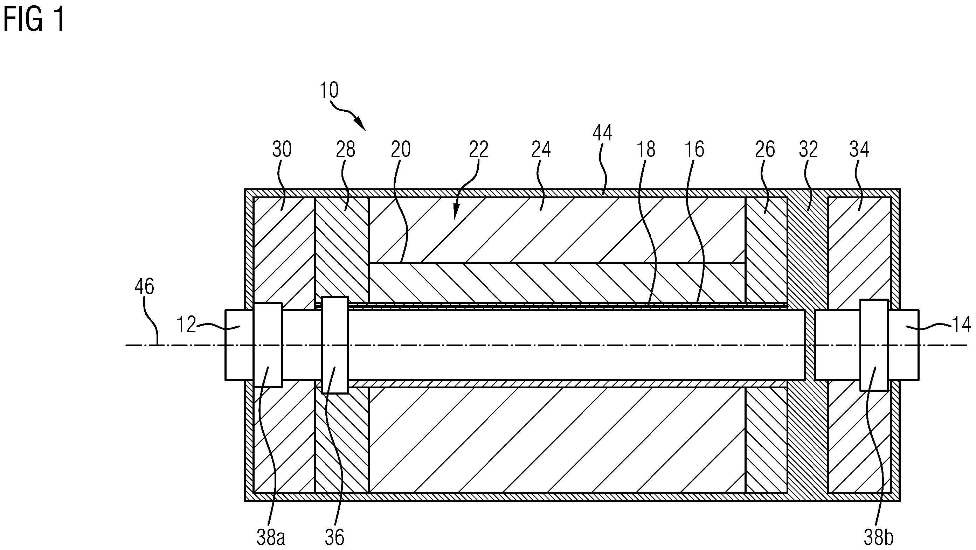

An embodiment of an axle drive assembly according to the present invention is shown in Fig. 1, generally at 10. The axle drive assembly 10 includes a first drive shaft 12 and a second drive shaft 14, the first drive shaft 12 extends through a hollow shaft 16. A needle bearing assembly 18 is mounted to the outer surface 12a of the first drive shaft 12 and the inner surface of the hollow shaft 16, such that the first drive shaft 12 and hollow shaft 16 are able to rotate independently relative to one another. In Fig. 1, the needle bearing assembly 18 is shown as being the same length as the hollow shaft 16. However, it is within the scope of the invention that the needle bearing assembly 18 may be shorter than the length of the hollow shaft 16, or multiple needle bearing assemblies may be used along the hollow shaft 16 to allow for relative rotation between the hollow shaft 16 and the first drive shaft 12. Furthermore, in an embodiment, the needle bearing assembly 18 is constructed such that the outer surface 12a of the drive shaft 12 is as close as possible to the inner diameter of the needle bearing assembly 18.

Mounted to the hollow shaft 16 is a rotor 20, which is part of an electric motor, or e-machine, shown generally at 22, where the rotor 20 rotates with the hollow shaft 16. The e-machine 22 also includes a stator 24, which circumscribes the rotor 20.

The axle drive assembly 10 also includes a reducer 26 and an inverter 28. A first end of the hollow shaft 16 extends through the inverter 28, and a second end of the hollow shaft 16 extends through and is connected to a first gear of the reducer 26. A first end of the first drive shaft 12 also extends through the inverter 28 and through a first brake assembly 30, and the first end of the first drive shaft 12 also extends out of the axle drive assembly 10. The first gear of the reducer 26 is a sun gear and may be in mesh with one or more of a first set of planetary gears mounted to a first carrier, where the first set of planetary gears and the first carrier are also part of the reducer 26. The first set of planetary gears are also in mesh with a ring gear, which is stationary, where the first gear, first set of planetary gears, first carrier, and ring gear are part of a first planetary gear set, and the first planetary gearset is part of the reducer 26.

The first carrier is connected to a second carrier, where the second carrier is part of a second planetary gear set. The second carrier is connected to a second group of planetary gears, and the second group of planetary gears are in mesh with a second ring gear and a second sun gear, where the second ring gear and the second sun gear are rotatable. The second sun gear is connected to the first drive shaft 12, and the second ring gear is connected to the second drive shaft 14. The second group of planetary gears, the second ring gear, and the second sun gear are all part of the second planetary gear set, and the second planetary gear set is part of the differential 32. The second drive shaft 14 also extends through a second brake assembly 34, and a second end of the second drive shaft 14 extends outside of the axle drive assembly 10.

The inverter 28 detects the speed of the hollow shaft 16 through the use of a metal ring 36 mounted to the hollow shaft 16, where the metal ring 36 includes one or more markers such that the inverter 28 is able to detect the angle of rotation and the rotational speed of the hollow shaft 16.

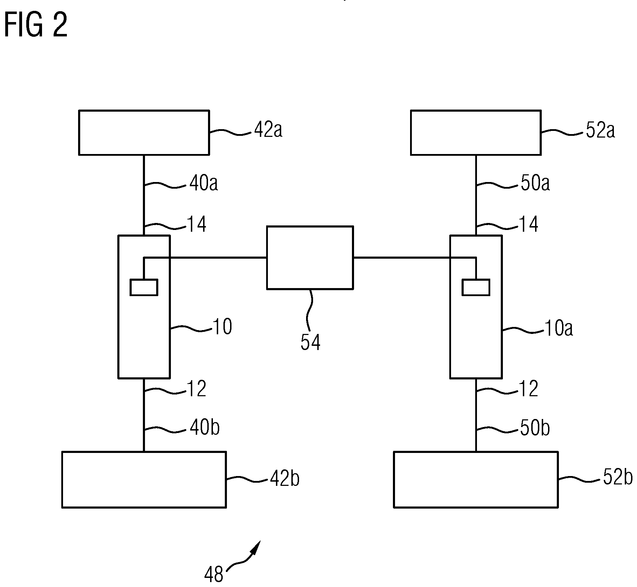

Mounted to the first drive shaft 12 is a first anti-lock braking sensor (ABS) 38a and mounted to the second drive shaft 14 is a second ABS sensor 38b. Referring to Fig. 2, a diagram of the powertrain components, shown generally at 48, of a vehicle are shown having at least one axle drive assembly 10 of the present invention. In Fig. 2 each of the drive shafts 12,14 of the axle drive assembly 10 is connected to a corresponding front axle shaft 40a,40b, and each of the front axle shafts 40a,40b is connected to a corresponding front wheel 42a,42b. The powertrain components may also include another axle drive assembly 10a, and each of the drive shafts 12,14 of the axle drive assembly 10a is connected to a corresponding rear axle shaft 50a,50b, and each of the rear axle shafts 50a,50b is connected to a corresponding rear wheel 52a,52b. Each axle drive assembly 10a, 10 may be controlled by a single control unit 54, shown in Fig. 2. The ABS sensors 38a,38b of each axle drive assembly 10,10a may be used to detect the speed of the first drive shaft 12 and the second drive shaft 14 of each axle drive assembly 10,10a, respectively, such that one or both of the brake assemblies 30,34 may be actuated when an undesirable amount of wheel slip is detected.

During operation, power is transferred from the inverter 28 to the e-machine 22 such that the e-machine 22 rotates the hollow shaft 16, and the rotation of the hollow shaft 16 is detected by the inverter 28. The rotational force of the hollow shaft 16 is transferred to the first sun gear of the first planetary gearset, rotating the first set of planetary gears such that the first carrier of the reducer 26 transfers the rotational force to the second carrier of the differential 32. The rotational force is then transferred to the first drive shaft 12 through the second sun gear, and to the second drive shaft 14 through the second ring gear.

The hollow shaft 16, e-machine 22, reducer 26, inverter 28, differential 32, and brake assemblies 30,34 are located in a single housing 44. In an embodiment, the hollow shaft 16, e-machine 22, reducer 26, differential 32, and brake assemblies 30,34 are liquid cooled. In an embodiment, the liquid cooling is achieved by oil cooling, and an oil pump may be used to spray the windings of the e-machine 22 to achieve the liquid cooling. In the embodiment shown, the inverter 28 is fluidically isolated from the rest of the components in the housing 44 such that the inverter 28 is also liquid cooled, but is water cooled instead of oil cooled. Each drive shaft 12,14 extends into the housing 44, and also extends partially out of the housing 44 and is connected to a corresponding one of the axle shafts 40a,40b (or 50a,50b) as described above. Furthermore, the hollow shaft 16 and the drive shafts 12,14 all rotate about the same axis 46.

The present invention is an axle drive assembly 10 which includes the e-machine 22 and the hollow shaft 16 extending through and connected to the e-machine 22, where the hollow shaft 16 also extends through the reducer 26 and the inverter 28. The axle drive assembly 10 also includes the first drive shaft 12 which extends through and is concentric with the hollow shaft 16 such that the first drive shaft 12 extends through the reducer 26 and is connected to the sun gear of the differential 32, and the first drive shaft 12 also extends through the inverter 28. The axle drive assembly 10 also includes a second drive shaft 14 which is connected to the ring gear of the differential 32. The hollow shaft 16, the e-machine 22, the reducer 26, and at least one brake assembly 30,34 are disposed in the housing 44 and are oil cooled. The inverter 28 is fluidically isolated from the rest of the components in the housing 44 such that the inverter 28 is water cooled. The first drive shaft 12 at least partially extends through and protrudes out of the housing 44, and the second drive shaft 14 also at least partially extends through and protrudes out of the housing 44. The axle drive assembly 10 also includes a first brake assembly 30 disposed in the housing 44 and adjacent the inverter 28, where the first brake assembly 30 is able to selectively apply a braking force to the first drive shaft 12. The axle drive assembly 10 also includes a second brake assembly 34 disposed in the housing 44 and adjacent the differential 32, where the second brake assembly 34 is able to selectively apply a braking force to the second drive shaft 14. The axle drive assembly 10 of the present invention also includes a metal ring 36 mounted to the hollow shaft 16, where the metal ring 36 includes one or more markers such that the inverter 28 is able to detect the rotational speed and the angle of rotation of the hollow shaft 16. During operation, the e-machine 22 receives power from the inverter 28, and the e-machine 22 rotates the hollow shaft 16, which is detected by the inverter 28. The rotational force of the hollow shaft 16 is transferred to the first planetary gearset such that the first carrier of the reducer 26 transfers the rotational force to the second carrier of the differential 32. The rotational force is then transferred to both of the drive shafts 12,14.

The description of the invention is merely exemplary in nature and, thus, variations that do not depart from the gist of the invention are intended to be within the scope of the invention. Such variations are not to be regarded as a departure from the spirit and scope of the invention.

## Claims

1. An axle drive assembly (10), comprising:
- a hollow shaft (16);
- at least one drive shaft (12,14) extending through and concentric with the hollow shaft (16);
- an e-machine (22), the hollow shaft (16) extending through and connected to the e-machine (22);
- a reducer (26) located next to the e-machine (22), the hollow shaft (16) engaged with the reducer (26);
- an inverter (28) located next to the e-machine (22), the hollow shaft (16) extending through the inverter (28);
- at least one brake assembly (30,34) connected to the at least one drive shaft (12,14) and operable for applying a brake force to the at least one drive shaft (12,14); and
- a housing (44), the hollow shaft (16), the e-machine (22), the reducer (26), the inverter (28) and the at least one brake assembly (30,34) disposed in the housing (44), and the at least one drive shaft (12,14) at least partially extends through and protrudes out of the housing (44);
- wherein the e-machine (22) rotates the hollow shaft (16) such that the hollow shaft (16) drives the reducer (26) and the at least one drive shaft (12,14).

2. The axle drive assembly (10) of one of the preceding claims, further comprising:
- a differential (32) adjacent to and engaged with the reducer (26);
- wherein the at least one drive shaft (12,14) is engaged with the differential (32).

3. The axle drive assembly (10) of one of the preceding claims, the at least one drive shaft (12,14) further comprising:
- a first drive shaft (12) extending through and concentric with the hollow shaft (16), the first drive shaft (12) extending through the inverter (28) and out of the housing (44), the first drive shaft (12) also extending through the reducer (26) and engaged with the differential (32); and
- a second drive shaft (14) engaged with the differential (32), the first drive shaft (12) and the second drive shaft (14) rotate about the same axis (46);
- wherein the reducer (26) is driven by the hollow shaft (16) such that the reducer (26) drives the differential (32), and the differential (32) drives the first draft shaft (12) and the second drive shaft (14).

4. The axle drive assembly (10) of one of the preceding claims, the at least one brake assembly (30,34) further comprising:
- a first brake assembly (30) located adjacent to the inverter (28), a portion of the first shaft (12) extends through the first brake assembly (30); and
- a second brake assembly (34) located adjacent to the differential (32), a portion of the second shaft (14) extends through the second brake assembly (14);
- wherein the first brake assembly (30) selectively limits the rotation of the first drive shaft (12), and the second brake assembly (34) selectively limits the rotation of the second drive shaft (14).

5. The axle drive assembly (10) of one of the preceding claims, wherein the first brake assembly (30) and the second brake assembly (34) are located in the housing (44) and are liquid cooled.

6. The axle drive assembly (10) of one of the preceding claims, wherein the hollow shaft (16), the e-machine (22), and the reducer (26) are oil cooled.

7. The axle drive assembly (10) of one of the preceding claims, further comprising a ring (36) mounted to the hollow shaft (16) such that the ring (36) is circumscribed by the inverter (28), and the inverter (28) detects the rotational speed and angle of the ring (36) which corresponds to the rotational speed and angle of the hollow shaft (16).

8. The axle drive assembly (10) of one of the preceding claims, wherein the hollow shaft (16), the first drive shaft (12), and the second drive shaft (14) rotate about the same axis (46).

9. The axle drive assembly (10) of one of the preceding claims, wherein the inverter (28) is water cooled.

10. A method for operating an axle drive assembly (10), comprising the steps of:
- providing a hollow shaft (16);
- providing a first drive shaft (12) extending through and concentric with the hollow shaft (16);
- providing a second drive shaft (14);
- providing a differential (32), the first drive shaft (12) engaged with the differential (32), and the second drive shaft (14) engaged with the differential (32);
- providing an e-machine (22), the hollow shaft (16) extending through and connected to the e-machine (22);
- providing a reducer (26) located between the e-machine (22) and the differential (32) such that the reducer (26) is engaged with the differential (32), the hollow shaft (16) engaged with the reducer (26), and the first drive shaft (12) extends through the reducer (26);
- providing an inverter (28) located next to the e-machine (22), the hollow shaft (16) extending through the inverter (28);
- providing at least one brake assembly (30,34); and
- providing a housing (44), the hollow shaft (16), the e-machine (22), the reducer (26), the inverter (28) and the at least one brake assembly (30,34) disposed in the housing (44), the first drive shaft (12) at least partially extends through and protrudes out of the housing (44), and the second drive shaft (14) at least partially extends through and protrudes out of the housing (44);
- rotating the hollow shaft (16) via the e-machine (22), which transfers rotational force to the reducer (26), and the reducer (26) then transfers the rotational force to the differential (32), and the differential (32) transfers the rotational force to the first drive shaft (12) and the second drive shaft (14).

11. The method of claim 9, further comprising the steps of:
- providing the at least one brake assembly (30,34) to further comprise a first brake assembly (30) located adjacent to the inverter (28) such that the first drive shaft (12) extends through the first brake assembly (30); and
- providing the at least one brake assembly (30,34) to further comprise a second brake assembly (34) located adjacent to the differential (32) such that the second drive shaft (14) extends through the second brake assembly (34);
- using the first brake assembly (30) to selectively limit the rotation of the first drive shaft (12);
- using the second brake assembly (34) to selectively limit the rotation of the second drive shaft (14).

12. The method of one of the preceding claims, further comprising the steps of:
- providing a ring (36) which circumscribes the hollow shaft (16), such that the ring (36) is circumscribed by the inverter (28);
- detecting the rotational speed and position of the hollow shaft (16) by detecting the rotational speed and position of the hollow ring (36) using the inverter (28).
